# EUROPEAN PATENT SPECIFICATION

(11) **EP 1 720 326 B1**
(45) Date of publication and mention of the grant of the patent: **19.03.2008**
(21) Application number: 06008966.1
(22) Date of filing: 28.04.2006
(51) Int. Cl.: H04M 1/02

(54) **Portable terminal with two bodies being both foldable and slidable relative to each other**
Tragbares Endgerät mit zwei Gehäusen die sowohl faltbar als auch ausziehbar relativ zueinander sind
Terminal portable ayant deux boîtiers étant à la fois pliables et coulissants l'un envers l'autre

(30) Priority: 03.05.2005 KR 20050037109
(43) Date of publication of application: 08.11.2006
(73) Proprietor: LG Electronics Inc., Yongdungpo-Gu Seoul 150-010 (KR)
(72) Inventor: Bae, So Young, Poongdeokcheon-ri Sooji-eup Yongin-si (KR); Cho, Sung Moon, Seoul (KR); Do, Dae Won, Giheung-eup Yongin-si Gyeongi-do (KR); Song, Gun Ho, Joongrang-gu Seoul (KR); Choi, Woo Young, Gangnam-gu Seoul (KR); Jeon, Hye Jeong, Gangnam-gu Seoul (KR)
(74) Representative: Beyer, Andreas

(56) References cited:
- EP-A- 1 439 685
- WO-A-98/45769
- US-A- 5 657 370
- US-A1- 2001 027 121
- US-A1- 2005 044 665
- US-B1- 6 351 372

## Description

### BACKGROUND OF THE INVENTION

### Field of the Invention

The present invention relates to a portable terminal, and in particular to a portable terminal having both sliding and rotational functionality.

### Description of the Related Art

Modern society has experienced an increasing desire for portable wireless communication terminals. Portable terminals are available in assorted styles and designs in an attempt to meet ever-increasing consumer demands.

Portable terminals are often classified based upon their structural configuration. Popular terminals include bar-type, flip-type, folding-type, and sliding-type terminals, among others. Bar-type terminals generally include exposed keypads, which are susceptible to damage. Flip-type terminals have been developed in an effort to alleviate damage concerns of the bar-type terminals. Typical flip-type terminals are structured so that a portion of the device may be selectively placed over the keypad to protectively cover the keypad while the terminal in not in use. Such terminals have experienced a measure of success, but some users have commented that flip-type terminals have a relatively long main body which makes the device inconvenient to handle and carry for extended periods.

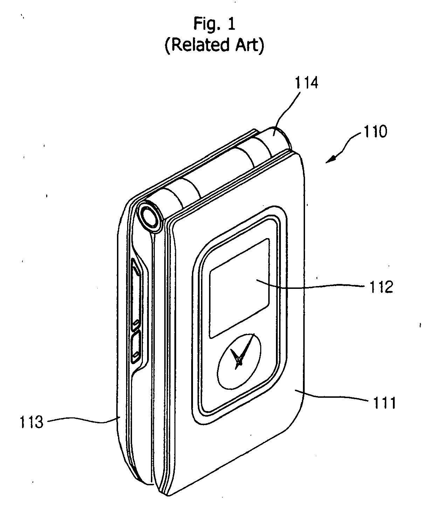

Folding-type portable terminals have been developed in an attempt to improve upon the shortcomings of both the bar-type and flip-type terminals. A typical folding-type terminal includes an LCD positioned on an inner surface of a folding portion of the terminal. Another type of folding terminal includes two LCD displays; one display positioned on the inner surface of a folding portion and a second displayed positioned on the outer surface of the folding portion. An example of the latter type is depicted in FIG. 1.

More specifically, FIG. 1 depicts folding portable terminal 110 having folding portion 111, which pivots relative to main body 113 via hinge 114. The folding portion may be moved between open and closed positions by pivoting the folding portion about hinge 114. LCD 112 is shown positioned on the outer surface of the folding portion. As such, LCD 112 is visible to the user while the portable terminal is in the closed position. This arrangement allows viewing of information that may be presented on LCD 112 (e.g., call status, time, date, signal strength).

Opening folding portion 111 permits access to the keypad and a second LCD display that is located on an inner surface (not shown) of folding portion 111. Operating two LCD displays consumes a relatively significant amount of power. To decrease these power requirements, power to the second (inner) display is terminated whenever the folding portion is in the closed position.

The hinge and associated components of conventional folding-type portable terminals are susceptible to damage as a result of repeated use. Sliding-type terminals, which do not typically require a hinge, have been developed in an effort to alleviate the stated disadvantages of folding-type portable terminals.

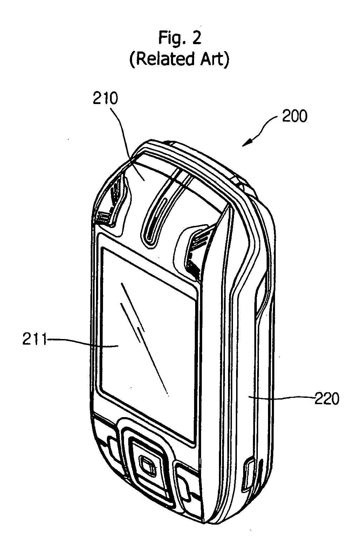

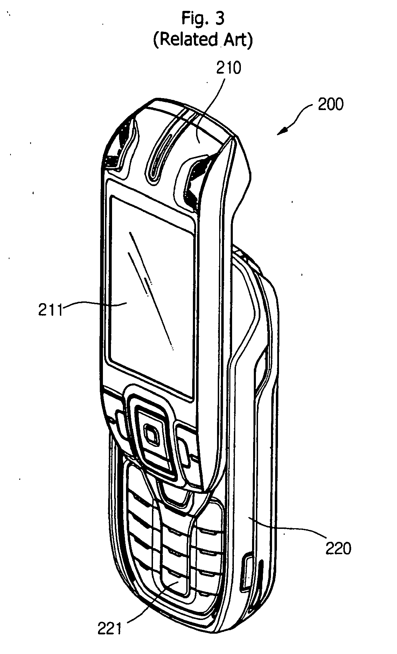

FIGS. 2 and 3 are perspective views showing a conventional sliding-type terminal. Portable terminal 200 includes upper housing 210 and lower housing 220. The upper housing typically includes various components such as speaker, functional keys, LCD display 211, and sliding components. The lower housing is often configured with assorted components such as a microphone, an antenna, a battery, and keypad 221, for example.

Terminal 200 may further include a flexible printed circuit board (FPCB). The FPCB electrically connects a first circuit board for driving the electronic devices mounted on the upper housing 210, and a second circuit board for driving the various components associated with lower housing 220. Portable terminal 200 is often configured to receive incoming calls without opening upper and lower housings 210 and 220.

Demand for the sliding-type portable terminals has increased in recent years. In the closed position, typical sliding-type portable terminals have an overall size and shape that is similar to that of a folding-type portable terminal. In the open position, the sliding-type terminal is similar in size and shape to that of the bar-type terminal.

Consumers have increasingly accepted both the sliding-type and folding-type terminals, based on the respective advantages of each of these types of terminals.

However, terminals have not yet been developed which exploit the benefits of both the sliding-type and the folding-type terminals in a single terminal.

Document US 2001/0027121 A1 concerns a cellular telephone, personal digital assistant and pager unit having a first body having a display and a second body having a plurality of manual inputs. The second body can be slidably and rotatably displaced via the first body.

Document EP 1 439 685 A1 concerns a flip-phone. In one embodiment, a flex connector and a flex shaft are shown, which are capable of providing a connection between the main body and the cover of the flip-phone. However, the connector only provides an electric coupling for a limited sliding distance of the flip-phone cover.

Document US 2005/0044665 A1 concerns a slide hinge for a small-sized information terminal. The terminal comprises a first casing and a second casing. Furthermore, a slide hinge is provided, which has the function of relatively and automatically sliding the first casing and the second casing from predetermined slide positions.

Document US 6,351,372 B1 concerns a personal computing device with a foldable keyboard. The device comprises a chassis having a top and a bottom and a keyboard movably secured to the chassis.

Document US 5,657,370 concerns a cellular portable radiotelephone. The radiotelephone includes a first housing having at least a telephone receiving section and a second housing slidably and pivotally mounted to the first housing and capable of being housed in the first housing.

Document WO 98/45769 concerns an adjustable screen lap-top computer. The lap-top's display height and angular position can be adjusted.

### SUMMARY OF THE INVENTION

The above problems are solved by a portable terminal having the features of claims 1 and 14 and a method of assembling a portable terminal having the features of claim 17.

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In accordance with an embodiment, a portable terminal includes a first body having input keys located on a front surface, and a second body having a display located on a front surface. Guides are separately located at each side of the second body, and a hinge structure is located at one end of the first body for coupling to the second body, such that the hinge structure is sized to be slidably received within the guides.

In one feature, the hinge structure is structured to be rotatably repositionable relative to the first body.

In another feature, the hinge structure further includes pins which slidably engage the guides, such that the pins maintain a fixed spatial relationship relative to the first body.

In one aspect, the hinge structure is fixed relative to the first body, and extends from the first body a distance which permits relative rotational motion between the first body and the second body.

In another aspect, the guides are structured to permit relative linear motion between the hinge structure and the second body. Alternatively or additionally, the guides are structured to permit relative rotational motion between the hinge structure and the second body.

In yet another aspect, the hinge structure includes an angular range of motion, relative to the first body, of at least about 180°.

In still yet another aspect, the hinge structure positively engages the first body in a plurality of different angular locations relative to the first body. If desired, the hinge structure alternatively or additionally positively engages the second body in a plurality of different angular locations relative to the second body.

In one aspect, the guides are defined along a length of an associated side of the second body, the length having first and second ends. Each of the guides is structured to permit relative linear motion between the hinge structure and the second body along the length and between the first and second ends.

According to another feature, the guides are structured to permit relative rotational motion between the hinge structure and the second body when the hinge structure is proximately located to either of the first or second ends of the guides.

In another aspect, the hinge structure is structured to positively engage the second body and the first and second ends.

In yet another feature, the portable terminal further includes circuitry for electrically coupling the display with electrical components associated with the first body. The circuitry includes an electrical contact formed within at least a portion of the guides, which is in electrical communication with the display, and an electrical contact associated with the hinge structure, which cooperates with the electrical contact formed within a least a portion of the guides.

In another feature, the portable terminal further includes a second display located on a rear surface of the second body.

In accordance with an alternative embodiment, a method of assembling a portable terminal includes locating input keys on a front surface of a first body, locating a display on a front surface of a second body, and forming a guide along two separate sides of the second body. The method also includes positioning a hinge structure at one end of the first body, coupling the first body to the second body using the hinge structure, and causing the hinge structure to be slidably received within the guides.

These and other embodiments will also become readily apparent to those skilled in the art from the following detailed description of the embodiments having reference to the attached figures, the invention not being limited to any particular embodiment disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments. In the drawings:
- FIG. 1: depicts a conventional folding portable terminal having a folding portion which pivots relative to a main body via a hinge;
- FIGS. 2 and 3: are perspective views showing a conventional sliding-type terminal;
- FIGS. 4A - 4D: are perspective views of a portable terminal in accordance with an embodiment of the present invention;
- FIGS. 5A - 5D: are corresponding side views of the portable terminal shown in FIGS. 4A - 4D;
- FIGS. 6A - 6D: are perspective views of a portable terminal in accordance with an alternative embodiment of the present invention;
- FIGS. 7A - 7D: are corresponding side views of the portable terminal shown in FIGS. 6A - 6D; and
- FIG. 8: is a flowchart depicting a method of assembling a portable terminal in accordance with an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or similar parts.

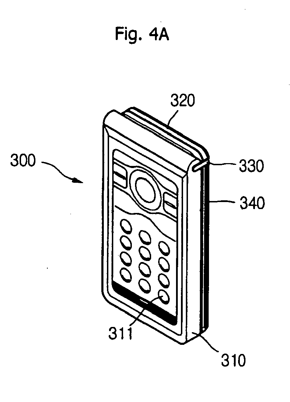

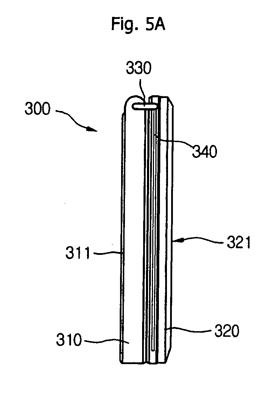

FIGS. 4A - 4D are perspective views of portable terminal 300 in accordance with an embodiment of the present invention. FIGS. 5A - 5D are corresponding side views of the portable terminal shown in FIGS. 4A - 4D. These figures provide an example of how the various components of the terminal may be moved and manipulated relative to one another.

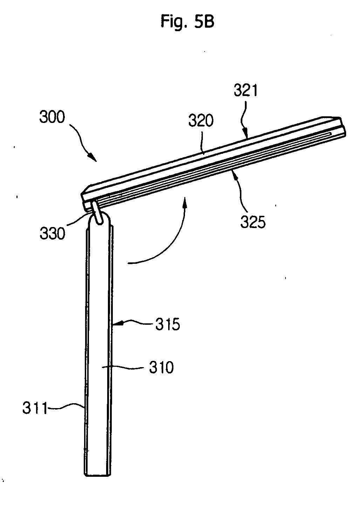

Referring now to the just-identified figures, portable terminal 300 is shown having first body 310, second body 320, hinge 330, and guide 340. The guide is shown located on the side of the second body. Input keys 311 are shown formed on a front surface of first body 310, and display 321 is shown formed on the front surface of second body 320. The display may be implemented using a suitable display component, such as an LCD display. Alternatively or additionally, a second display may be formed on rear surface 325 of the second body (FIG. 5B).

Hinge 330 may be pivotally coupled to an upper portion of first body 310, and is structured to be slidably received within guide 340. Only one side of terminal 300 is shown, thus only a single hinge 330 and one guide 340 are visible in the figures. However, the opposite side of the terminal may be similarly configured such that both sides of second body 320 include guide 340, and first body 310 includes two hinges, one on either side of the upper portion of the first body. Each guide is defined along a length of each side of the second body. Typically, the guides are structured to permit relative linear motion between the hinge and the second body along the entire length of the guides.

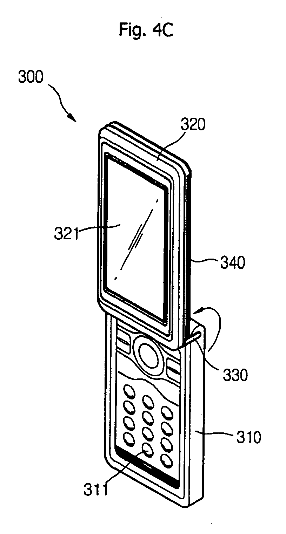

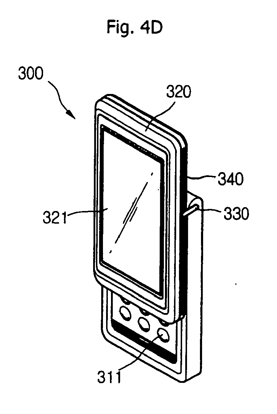

In a typical configuration, there are three primary types of relative movement possible between various components of terminal 300. First, hinges 330 may be structured to pivot approximately 180°, for example, relative to first body 310. A specific example of the pivoting range of the hinges is depicted in FIGS. 4A and 4C. Second, guides 340 may be structured to permit relative linear motion between hinges 330 and second body 320, such as that depicted in FIGS. 4C and 4D. Third, hinges 330 and second body 320 may be structured so that relative rotational motion between these components is possible. In an embodiment, such rotational motion is possible when the hinges are proximately located to either end of the guides.

Generally, one or more electrical contacts or signaling paths are formed within at least a portion of guides 340 to facilitate electrical communication with display 321. In addition, hinges 330 may be configured with cooperating contacts or signaling paths which facilitate electrical communication with various components associated with first body 310, such as input keys 311.

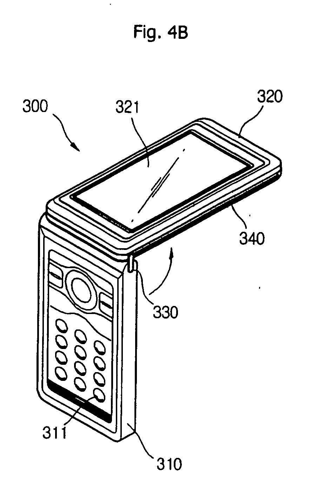

To demonstrate some of the capabilities of terminal 300, exemplary techniques for manipulating the terminal between first and second positions will now be described. As shown in FIGS. 4A and 5A, terminal 300 is in the first position such that a user has access to input keys 311 and may place a call, text message, or otherwise operate the terminal. In FIGS. 4B and 5B, hinges 330 are pivoted counterclockwise relative to first body 310, causing portions of the second body to move away from the first body. This action exposes rear surface 325 of second body 320, and rear surface 315 of first body 310.

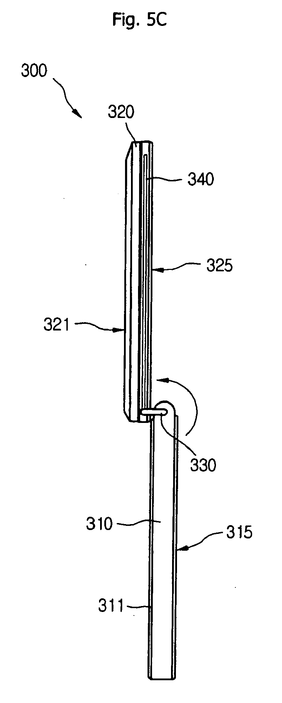

FIGS. 4C and 5C show second body 320 having reached a position that is substantially parallel with first body 310. At this point, the user again has access to keypad 311, and can then operate the terminal as needed. Users often find that placing terminal 300 in this extended position provides for optimal comfort while using the terminal in the calling mode.

Various components of terminal 300 may be configured so that the first and second bodies remain in the extended position, such as that depicted in FIGS. 4C and 5C. If desired, guides 340 may be further configured so that they positively engage hinges 330 at a plurality of different locations along the length of the guides, thus providing a number of different extended positions.

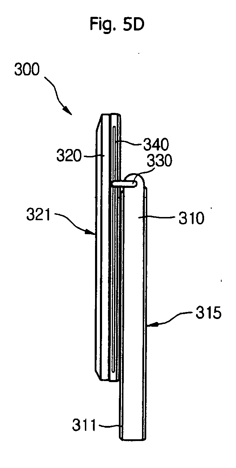

As shown in FIGS. 4D and 5D, relative linear motion between the first and second bodies causes the second body to pass over and eventually cover and protect keypad 311. Simply put, the second body may be slid downward to overlap and cover the now underlying keypad of the first body. During this sliding process, the second body is positioned adjacent to the first body, as guided by guides 340 and cooperating hinges 330. Changing the terminal from the second position back to the first position may be accomplished by essentially reversing the just-described process.

If desired, hinges 330 may be designed with an internal or external stop mechanism, or other similar device, which prohibits the hinges from rotating beyond certain defined points. An example of such rotational range is depicted in FIGS. 5A and 5C. Another option is to structure the hinges so that they positively engage first body 310 in one or more different angular locations relative to the first body.

As noted above, guides 340 and second body 320 may be structured so that relative rotational motion between these components is possible. If desired, these components may additionally be configured so that the hinges positively engage the second body in one or more different angular locations relative to the second body.

Either or both of these positively engaging features may be used when it is desired for the first and second bodies to remain in a partially or fully extended position for an extended period of time. For instance, the user may want to view pictures, video clips, and the like on display 321. To do this, the user would place the terminal in the position depicted in FIG. 4B, for example. The terminal may then be placed (e.g., on its side or with the input keys facing downward) on a surface such as a desk or table. Because the hinges positively engage the first body and/or the second body, the terminal will remain in this partially or fully extended position.

In accordance with another embodiment, the components of the first and second bodies 310 and 320 may be interchanged. For example, input keys 311 may be coupled to the second body, and display 321 may be coupled to the first body.

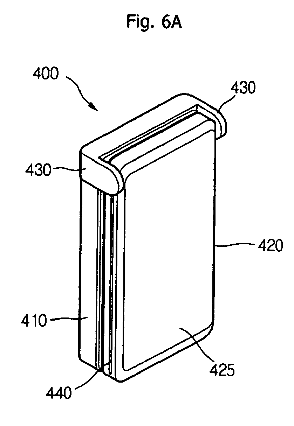

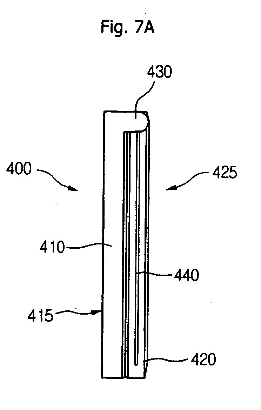

FIGS. 6A - 6D are perspective views of portable terminal 400 in accordance with an alternative embodiment of the present invention. FIGS. 7A - 7D are corresponding side views of the portable terminal shown in FIGS. 6A - 6D. These figures provide an example of how various components of the terminal may be moved and manipulated relative to one another.

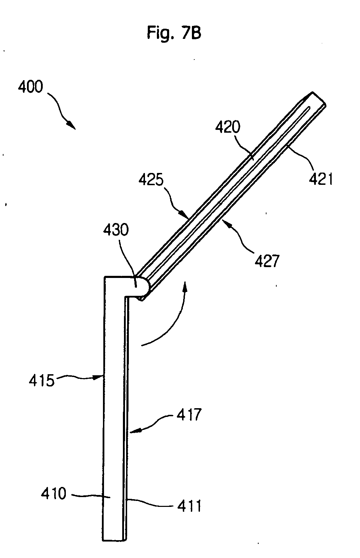

Referring now to the just-identified figures, portable terminal 400 is shown having first body 410, second body 420, hinges 430, and guide 440. The guide is shown located on the side of the second body. Input keys 411 are shown formed on front surface 417 of first body 410, and display 421 is shown formed on front surface 427 of second body 420. The display may be implemented using a suitable display component, such as an LCD display. Alternatively or additionally, a second display may be formed on rear surface 425 of the second body (FIG. 7B).

Hinges 430 are shown affixed to an upper portion of first body 410, one hinge on either side of the first body. These hinges extend outward from front surface 417 of the first body. Typically, the hinges extend a certain distance which approximates the thickness of second body 420. Each hinge may include a pin or other similar structure which engages guide 440. These pins are in a fixed spatial relationship with their respective hinges, and are structured to be slidably received within guides 440. Only one side of terminal 400 is shown, thus only one guide 440 is visible in the figures. However, the opposite side of the terminal may be similarly configured such that both sides of second body 420 include guide 440. More specifically, each guide is defined along a length of each side of the second body. Typically, the guides are structured to permit relative linear motion between the hinge and the second body along the entire length of the guides.

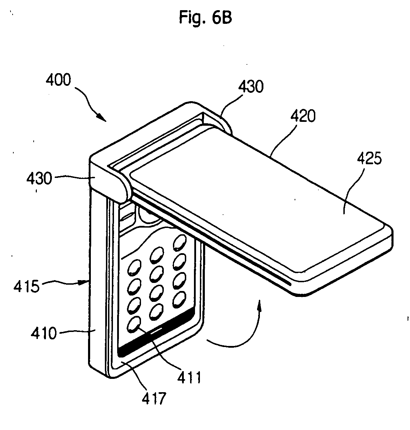

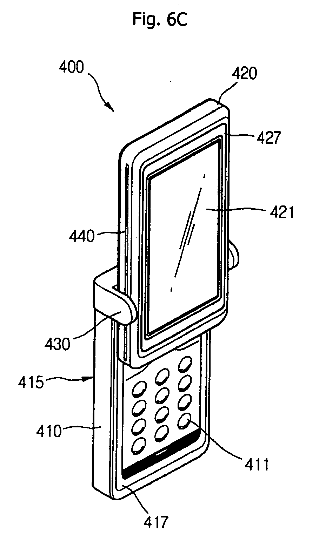

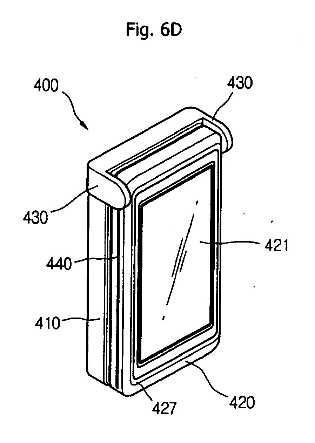

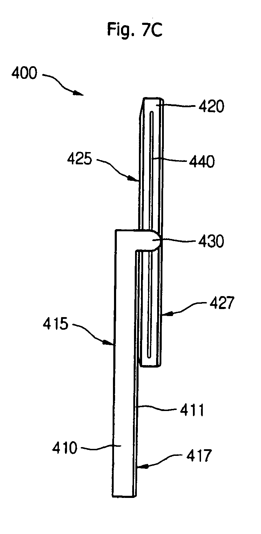

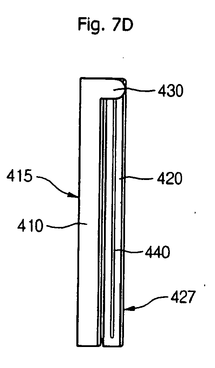

In a typical configuration, there are two primary types of relative movement possible between various components of terminal 400. First, guides 440 may be structured to permit relative linear motion between hinges 430 and second body 420, such as that depicted in FIGS. 6C, 6D, 7C, and 7D. Second, hinges 430 and second body 420 may be structured so that relative rotational motion between these components is possible. In an embodiment, such rotational motion is possible when the hinges are proximately located to either end of the guides. An example of this is depicted in FIGS. 6A, 6B, 7A, and 7B.

For reasons similar to those described with regard to other embodiments, one or more electrical contacts or signaling paths may be formed on or within at least a portion of guides 440, and on the cooperating hinges 430 and associated pins. Power and signaling can be transmitted through the hinges and related components using conventional techniques, such as a flexible cable.

To demonstrate some of the capabilities of terminal 400, exemplary techniques for manipulating the terminal will now be described. As shown in FIGS. 6A and 7A, terminal 400 is in the first position exposing rear surface 415 of the first body and rear surface 425 of the second body. This first position is convenient for transporting the terminal in a handbag or clothing pocket, for example. This is because both the keypad and display are protected from damage, and the input keys are protected from accidental activation.

In FIGS. 6B and 7B, second body 420 is shown pivoted counterclockwise relative to hinges 430, causing portions of the second body to move away from the first body. This action exposes front surface 417 of the first body, and front surface 427 of the second body. In addition, input keys 411 and display 421 are also exposed.

FIGS. 6C and 7C show second body 420 having reached an extended position such that the second body is substantially parallel with first body 410. In addition, relative linear motion between the first and second bodies has also been applied causing the second body to overlap and partially cover the first body. In this extended position, the user has access to input keys 411 and may place a call, text message, or otherwise operate the terminal. Display 421 is also clearly visible.

Various components of terminal 400 may be configured so that the first and second bodies remain in an extended position, such as that depicted in FIGS. 6C and 7C. For instance, guides 440 may be configured so that they positively engage the pins of hinges 430 at a plurality of different locations along the length of the guides, thus providing a number of different extended positions.

FIGS. 6D and 7D show the result of further relative linear motion between the first and second bodies, which causes second body 420 to eventually cover and protect input keys 411. These figures show terminal 400 in the second position, which is identified by input keys 411 having been covered while display 421 is exposed. The terminal may be in either a calling mode or a standby mode, as determined by user operation. Changing the terminal from the second position back to the first position may be accomplished by essentially reversing the just-described process.

As noted above, hinges 430 and second body 420 may be structured so that relative rotational motion between these components is possible. If desired, these components may additionally be configured so that the hinges and included pins positively engage the second body in one or more different angular locations relative to the second body.

Either or both of these positively engaging features may be used when it is desired for the first and second bodies to remain in a partially open or extended position for a period of time. For instance, the user may want to view pictures, video clips, and the like on display 421. To do this, the user would place the terminal in the position depicted in FIG. 7B, for example. The terminal may then be placed with rear surface 415, for example, on a surface such as a desk or table. Because the hinges positively engage the second body, the terminal will remain in this partially open state, which allows hands-free viewing of display 421.

In accordance with another embodiment, the components of the first and second bodies 410 and 420 may be interchanged. For example, input keys 411 may be coupled to the second body, and display 421 may be coupled to the first body.

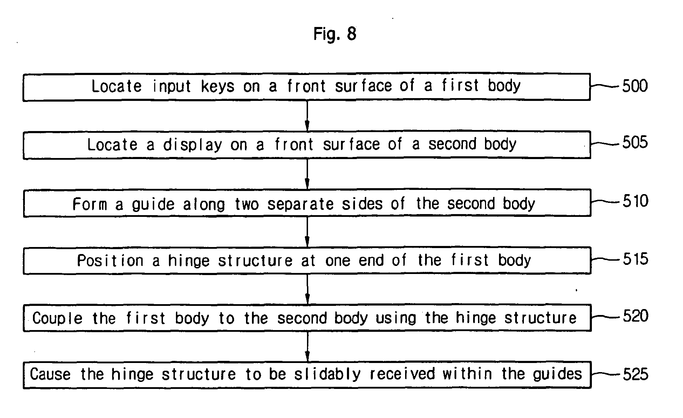

FIG. 8 is a flowchart depicting a method of assembling a portable terminal in accordance with an embodiment of the present invention. At block 500, input keys are located on a front surface of a first body. In block 505, a display is located a front surface of a second body. If desired, a second display may be located on the rear surface of the second body.

In block 510, a guide is formed along two separate sides of the second body. If desired, one or more electrical contacts may be formed within at least a portion of the guides to facilitate signaling between the first and second bodies. In accordance with an embodiment, the guides may be configured to permit relative rotational motion between the second body and the hinge structure, as well as relative linear motion between the first and second bodies. In block 515, a hinge structure is positioned at one end of the first body. In block 520, the first body is coupled to the second body using the hinge structure, causing the first and second hinges to be slidably received within the guides (block 525).

Various embodiments disclosed herein provide a composite type portable terminal, which allows a user to realize the benefits of both the sliding-type and folding-type portable terminals.

The foregoing embodiments and advantages are merely exemplary and are not to be construed as limiting the present invention. The present teaching can be readily applied to other types of apparatuses and processes. The description of the present invention is intended to be illustrative, and not to limit the scope of the claims. Many alternatives, modifications, and variations will be apparent to those skilled in the art.

## Claims

1. A portable terminal (300; 400), comprising:
a first body (310; 410) having input keys (311; 411) located on a front surface;
a second body (320; 420) having a display (321; 421) located on a front surface;
guides (340; 440) separately located at each side of said second body (320; 420) ; and
a hinge structure (330; 430) located at one end of said first body (310; 410) for coupling to said second body (320; 420), wherein said hinge structure (330; 430) is sized to be slidably received within said guides (340; 440);
circuitry for electrically coupling said display (321; 421) with electrical components associated with said first body (310; 410), said circuitry **characterized by**, comprising:
an electrical contact formed within at least a portion of said guides (340; 440) and which is in electrical communication with said display (321; 421); and
an electrical contact associated with said hinge structure (330; 430) which is adapted to cooperate with said electrical contact formed within at least a portion of said guides (340; 440).

2. The portable terminal according to claim 1, wherein said hinge structure (330; 430) is structured to be rotatably repositionable relative to said first body (310; 410).

3. The portable terminal according to claim 1, wherein said hinge structure (330; 430) further comprises:
pins which are adapted to slidably engage said guides (340; 440), wherein said pins maintain a fixed spatial relationship relative to said first body (310; 410).

4. The portable terminal according to claim 1, wherein said hinge structure (330; 430) is fixed relative to said first body (310; 410), and extends from said first body (310; 410) a distance which permits relative rotational motion between said first body (310; 410) and said second body (320; 420).

5. The portable terminal according to claim 1, wherein said guides (340; 440) are structured to permit relative linear motion between said hinge structure (330; 340) and said second body (320; 420).

6. The portable terminal according to claim 1, wherein said guides (340; 440) are structured to permit relative rotational motion between said hinge structure (330; 340) and said second body (320; 420).

7. The portable terminal according to claim 2, wherein said hinge structure (330; 430) includes an angular range of motion, relative to said first body (310; 410), of approximately 180°.

8. The portable terminal according to claim 1, wherein said hinge structure (330; 430) is adapted to positively engage said first body (310; 410) in a plurality of different angular locations relative to said second body (320; 420).

9. The portable terminal according to claim 8, wherein said hinge structure (330; 430) is adapted to positively engage said second body (320; 420) in a plurality of different angular locations relative to said first body (310; 410).

10. The portable terminal according to claim 1, wherein each of said guides (340; 440) is defined along a length of an associated side of said second body (320; 420), said length having first and second ends, and wherein each of said guides (340; 440) is structured to permit relative linear motion between said hinge structure (330; 430) and said second body (320; 420) along said length and between said first and said second ends.

11. The portable terminal according to claim 10, wherein said guides (340; 440) are structured to permit relative rotational motion between said hinge structure (330; 430) and said second body (320; 420) when said hinge structure (330; 430) is located proximate to said first end or said second end of said guides (340; 440).

12. The portable terminal according to claim 10, wherein said hinge structure (330; 430) is structured to positively engage either of said first end and said second end in a plurality of different angular locations relative to said first body (310; 410) .

13. The portable terminal according to claim 1, further comprising:
a second display located on a rear surface of said second body (320; 420).

14. A portable terminal (300; 400), comprising:
a first body (310; 410) having input keys (311; 411) located on a front surface;
a second body (320; 420) having a display (321; 421) located on a front surface;
linear guides (340; 440) separately located at each side of said second body (320; 420); and
means (330; 430) for rotatably coupling said first body (310; 410) with said linear guides (340; 440) of said second body (320; 420) ;
circuitry for electrically coupling said display (321; 421) with electrical components associated with said first body (310; 410), said circuitry being **characterized by** comprising:
an electrical contact formed within at least a portion of said guides (340; 440) and which is in electrical communication with said display (321; 421); and
an electrical contact associated with said means for rotatably coupling (330; 430) which is adapted to cooperate with said electrical contact formed within at least a portion of said guides (340; 440).

15. The portable terminal according to claim 14, wherein said linear guides (340; 440) are structured to permit relative linear motion between said first body (310; 410) and said second body (320; 420).

16. The portable terminal according to claim 14, further comprising:
a second display located on a rear surface of said second body (320; 420).

17. A method of assembling a portable terminal, said method comprising the steps of:
locating (500) input keys on a front surface of a first body;
locating (505) a display on a front surface of a second body;
forming (510) a guide along two separate sides of said second body;
positioning (515) a hinge structure at one end of said first body;
coupling (520) said first body to said second body using said hinge structure;
wherein said hinge structure is slidably received within said guides (525);
electrically coupling said display with electrical components associated with said first body; **characterized by** forming at least one electrical contact within at least a portion of said guides and which is in electrical communication with said display; and associating an electrical contact with said hinge structure which cooperates with said electrical contact formed within at least a portion of said guides.

18. The method according to claim 17, further comprising the step of:
locating a second display on a rear surface of said second body.

19. The method according to claim 17, further comprising the step of:
structuring said guides to permit relative rotational motion between said second body and said hinge structure.

20. The method according to claim 17, further comprising the step of:
structuring said guides to permit relative linear motion between said first body and said second body.

21. The method according to claim 17, wherein said hinge structure is structured to be rotatably repositionable relative to said first body.

22. The method according to claim 17, further comprising the step of:
locating pins on said hinge structure, wherein said pins slidably engage said guides.

## Patentansprüche

1. Tragbares Endgerät (300; 400) mit:
einem ersten Körper (310, 410) mit an einer Vorderseite angeordneten Eingabetasten (311; 411);
einem zweiten Körper (320; 420) mit einer an einer Vorderseite angeordneten Anzeige (321; 421);
getrennt an jeder Seite des zweiten Körpers (320; 420) angeordneten Führungen (340; 440); und
einer an einem Ende des ersten Körpers (310; 410) angeordneten Gelenkstruktur (330; 430) zum Koppeln mit dem zweiten Körper (320; 420), wobei die Gelenkstruktur (330; 430) so dimensioniert ist, dass sie gleitend in den Führungen (340; 440) aufgenommen zu werden vermag;
einer Schaltung zum elektrischen Koppeln der Anzeige (321; 421) mit dem ersten Körper (310; 410) zugeordneten elektrischen Komponenten, **dadurch gekennzeichnet, dass** die Schaltung aufweist:
einen zumindest in einem Abschnitt der Führungen (340; 440) ausgebildeten elektrischen Kontakt, der elektrisch mit der Anzeige (321; 421) verbunden ist; und
einen der Gelenkstruktur (330; 430) zugeordneten elektrischen Kontakt, der mit dem in dem zumindest einen Abschnitt der Führungen (340; 440) ausgebildeten elektrischen Kontakt zusammenzuwirken vermag.

2. Tragbares Endgerät gemäß Anspruch 1, wobei die Gelenkstruktur (330; 430) so strukturiert ist, dass sie bezüglich des ersten Körpers (310; 410) drehbar wiederpositionierbar ist.

3. Tragbares Endgerät gemäß Anspruch 1, wobei die Gelenkstruktur (330; 430) des weiteren aufweist:
Anschlüsse, die dazu eingerichtet sind, dass sie auf gleitende Weise in die Führungen (340; 440) eingreifen, wobei die Anschlüsse (310; 410) ein festes räumliches Verhältnis bezüglich des ersten Körpers beibehalten.

4. Tragbares Endgerät gemäß Anspruch 1, wobei die Gelenkstruktur (330; 430) relativ zum ersten Körper (310; 410) befestigt ist und sich von dem ersten Körper (310; 410) eine Strecke erstreckt, die eine relative Drehbewegung zwischen dem ersten Körper (310; 410) und dem zweiten Körper (320; 420) erlaubt.

5. Tragbares Endgerät gemäß Anspruch 1, wobei die Führungen (340; 440) so strukturiert sind, dass sie eine relative Linearbewegung zwischen der Gelenkstruktur (330; 340) und dem zweiten Körper (320; 420) erlauben.

6. Tragbares Endgerät gemäß Anspruch 1, wobei die Führungen (340; 440) so strukturiert sind, dass sie eine relative Drehbewegung zwischen der Gelenkstruktur (330; 340) und dem zweiten Körper (320; 420) erlauben.

7. Tragbares Endgerät gemäß Anspruch 2, wobei die Gelenkstruktur (330; 430) bezüglich des ersten Körpers (310; 410) einen Bewegungswinkelbereich von ungefähr 180° aufweist.

8. Tragbares Endgerät gemäß Anspruch 1, wobei die Gelenkstruktur (330; 430) dazu eingerichtet ist, mit dem ersten Körper (310; 410) in einer Vielzahl unterschiedlicher Winkelstellungen relativ zum zweiten Körper (320; 420) formschlüssig in Eingriff zu treten.

9. Tragbares Endgerät gemäß Anspruch 8, wobei die Gelenkstruktur (330; 430) dazu eingerichtet ist, mit dem zweiten Körper (320; 420) hinsichtlich in einer Vielzahl unterschiedlicher Winkelstellungen relativ zum ersten Körper (310; 410) formschlüssig in Eingriff zu treten.

10. Tragbares Endgerät gemäß Anspruch 1, wobei jede der Führungen (340; 440) entlang einer Länge einer zugeordneten Seite des zweiten Körpers (320; 420) angeordnet ist, wobei die Länge erste und zweite Enden aufweist, und wobei jede der Führungen (340; 440) so strukturiert ist, dass sie eine relative Linearbewegung zwischen der Gelenkstruktur (330; 430) und dem zweiten Körper (320; 420) entlang der Länge und zwischen den ersten und zweiten Enden erlaubt.

11. Tragbares Endgerät gemäß Anspruch 10, wobei die Führungen (340; 440) so strukturiert sind, dass sie, wenn die Gelenkstruktur (330; 430) benachbart zu dem ersten Ende oder dem zweiten Ende der Führungen (340; 440) angeordnet ist, eine relative Drehbewegung zwischen der Gelenkstruktur (330; 430) und dem zweiten Körper (320; 420) erlauben.

12. Tragbares Endgerät gemäß Anspruch 10, wobei die Gelenkstruktur (330; 430) so strukturiert ist, dass sie entweder mit dem ersten Ende oder dem zweiten Ende in einer Vielzahl unterschiedlicher Winkelstellungen relativ zum ersten Körper (310; 410) formschlüssig in Eingriff tritt.

13. Tragbares Endgerät gemäß Anspruch 1, des weiteren mit:
einer an einer Rückseite des zweiten Körpers (320; 420) angeordneten Anzeige.

14. Tragbares Endgerät (300; 400) mit:
einem an einer Vorderseite angeordneten ersten Körper (310; 410) mit Eingabetasten (311; 411);
einem an einer Vorderseite angeordneten zweiten Körper (320; 420) mit einer Anzeige (321; 421);
an jeder Seite des zweiten Körpers (320; 420) einzeln angeordneten geradlinigen Führungen (340; 440); und
Mitteln (330; 430) zum drehbaren Koppeln des ersten Körpers (310; 410) mit den geradlinigen Führungen (340; 440) des zweiten Körpers (320; 420);
einer Schaltung zum elektrischen Koppeln der Anzeige (321; 421) mit dem ersten Körper (310; 410) zugeordneten elektrischen Komponenten, wobei die Schaltung **dadurch gekennzeichnet ist, dass** sie aufweist:
einen in zumindest einem Abschnitt der Führungen (340; 440) gebildeten elektrischen Kontakt, der in elektrischer Verbindung mit der Anzeige (321; 421) steht; und
einen den Mitteln zum drehbaren Koppeln (330; 430) zugeordneten elektrischen Kontakt, der mit dem in zumindest einem Teil der Führungen (340; 440) gebildeten elektrischen Kontakt zusammenzuwirken vermag.

15. Tragbares Endgerät gemäß Anspruch 14, wobei die geradlinigen Führungen (340; 440) so strukturiert sind, dass sie eine relative Linearbewegung zwischen dem ersten Körper (310; 410) und dem zweiten Körper (320; 420) erlauben.

16. Tragbares Endgerät gemäß Anspruch 14, des weiteren mit:
einer an einer Rückseite des zweiten Körpers (320; 420) angeordneten zweiten Anzeige.

17. Verfahren zum Zusammenbauen eines tragbaren Endgeräts, wobei das Verfahren die Schritte aufweist:
Anordnen (500) von Eingabetasten an einer Vorderseite eines ersten Körpers;
Anordnen (505) einer Anzeige an einer Vorderseite eines zweiten Körpers;
Bilden (510) einer Führung entlang zweier getrennter Seiten des zweiten Körpers;
Einrichten (515) einer Gelenkstruktur an einem Ende des ersten Körpers;
Koppeln (520) des ersten Körpers mit dem zweiten Körper unter Benutzung der Gelenkstruktur, wobei die Gelenkstruktur gleitend in den Führungen (525) aufgenommen wird;
elektrisches Koppeln der Anzeige mit dem ersten Körper zugeordneter elektrischer Komponenten; **gekennzeichnet durch** Bilden mindestens eines elektrischen Kontakts in zumindest einem Abschnitt der Führungen, der in elektrischer Verbindung mit der Anzeige steht; und Zuordnen eines elektrischen Kontakts zu der Gelenkstruktur, der mit dem in zumindest einem Abschnitt der Führungen gebildeten elektrischen Kontakt zusammenwirkt.

18. Verfahren gemäß Anspruch 17, des weiteren mit dem Schritt:
Anordnen einer zweiten Anzeige an einer Rückseite des zweiten Körpers.

19. Verfahren gemäß Anspruch 17, des weiteren mit dem Schritt:
Strukturieren der Führungen, um eine relative Drehbewegung zwischen dem zweiten Körper und der Gelenkstruktur zu erlauben.

20. Verfahren gemäß Anspruch 17, des weiteren mit dem Schritt:
Strukturieren der Führungen, um eine relative Linearbewegung zwischen dem ersten Körper und dem zweiten Körper zu erlauben.

21. Verfahren gemäß Anspruch 17, wobei die Gelenkstruktur so strukturiert ist, dass sie bezügliche des ersten Körpers drehbar wiederpositionierbar ist.

22. Verfahren gemäß Anspruch 17, des weiteren mit dem Schritt:
Anordnen von Anschlüssen an der Gelenkstruktur, wobei die Anschlüsse auf gleitende Weise in die Führungen eingreifen.

## Revendications

1. Terminal portable (300 ; 400), comprenant :
un premier boîtier (310 ; 410) ayant des touches d'entrée (311 ; 411) localisées sur une surface avant ;
un deuxième boîtier (320 ; 420) ayant un écran (321 ; 421) localisé sur une surface avant ;
des guides (340 ; 440) localisés séparément au niveau de chaque côté dudit deuxième boîtier (320 ; 420) ; et
une structure pivotante (330 ; 430) localisée au niveau d'une extrémité dudit premier boîtier (310 ; 410) pour un raccordement audit deuxième boîtier (320 ; 420), dans lequel ladite structure pivotante (330 ; 430) est dimensionnée pour être reçue de manière coulissante dans lesdits guides (340 ; 440) ;
des circuits pour raccorder électriquement ledit écran (321 ; 421) aux composants électriques associés audit premier boîtier (310 ; 410), lesdits circuits étant **caractérisés en ce qu'**ils comprennent :
un contact électrique formé dans au moins une partie desdits guides (340 ; 440) et qui est en communication électrique avec ledit écran (321 ; 421) ; et
un contact électrique associé à ladite structure pivotante (330 ; 430) qui est adapté pour coopérer avec ledit contact électrique formé dans au moins une partie desdits guides (340 ; 440).

2. Terminal portable selon la revendication 1, dans lequel ladite structure pivotante (330 ; 430) est structurée pour être repositionnable de manière rotative par rapport audit premier boîtier (310 ; 410).

3. Terminal portable selon la revendication 1, dans lequel ladite structure pivotante (330 ; 430) comprend en outre :
des axes qui sont adaptés pour engager de manière coulissante lesdits guides (340 ; 440), dans lequel lesdites axes maintiennent une relation spatiale fixe par rapport audit premier boîtier (310 ; 410).

4. Terminal portable selon la revendication 1, dans lequel ladite structure pivotante (330 ; 430) est fixe par rapport audit premier boîtier (310 ; 410), et s'étend dudit premier boîtier (310 ; 410) à une distance qui permet un mouvement de rotation relatif entre ledit premier boîtier (310 ; 410) et ledit deuxième boîtier (320 ; 420).

5. Terminal portable selon la revendication 1, dans lequel lesdits guides (340 ; 440) sont structurés pour permettre un mouvement linéaire relatif entre ladite structure pivotante (330 ; 340) et ledit deuxième boîtier (320 ; 420).

6. Terminal portable selon la revendication 1, dans lequel lesdits guides (340 ; 440) sont structurés pour permettre un mouvement de rotation relatif entre ladite structure pivotante (330 ; 340) et ledit deuxième boîtier (320 ; 420).

7. Terminal portable selon la revendication 2, dans lequel ladite structure pivotante (330 ; 430) comprend une gamme de mouvements d'angle, par rapport audit premier boîtier (310 ; 410), d'approximativement 180°.

8. Terminal portable selon la revendication 1, dans lequel ladite structure pivotante (330 ; 430) est adaptée pour engager positivement ledit premier boîtier (310 ; 410) dans une pluralité d'emplacements d'angle différents par rapport audit deuxième boîtier (320 ; 420).

9. Terminal portable selon la revendication 8, dans lequel ladite structure pivotante (330 ; 430) est adaptée pour engager positivement ledit deuxième boîtier (320 ; 420) dans une pluralité d'emplacements d'angle différents par rapport audit premier boîtier (310 ; 410).

10. Terminal portable selon la revendication 1, dans lequel chacun desdits guides (340 ; 440) est défini le long d'une longueur d'un côté associé dudit deuxième boîtier (320 ; 420), ladite longueur ayant une première et une deuxième extrémités, et dans lequel chacun desdits guides (340 ; 440) est structuré pour permettre un mouvement linéaire relatif entre ladite structure pivotante (330 ; 430) et ledit deuxième boîtier (320 ; 420) le long de ladite longueur et entre ladite première et ladite deuxième extrémités.

11. Terminal portable selon la revendication 10, dans lequel lesdits guides (340 ; 440) sont structurés pour permettre un mouvement de rotation relatif entre ladite structure pivotante (330 ; 430) et ledit deuxième boîtier (320 ; 420) lorsque ladite structure pivotante (330 ; 430) est localisée près de ladite première extrémité ou de ladite deuxième extrémité desdits guides (340 ; 440).

12. Terminal portable selon la revendication 10, dans lequel ladite structure pivotante (330 ; 430) est structurée pour engager positivement l'une ou l'autre de ladite première extrémité et de ladite deuxième extrémité dans une pluralité d'emplacements d'angle différents par rapport audit premier boîtier (310 ; 410).

13. Terminal portable selon la revendication 1, comprenant en outre :
un deuxième écran localisé sur une surface arrière dudit deuxième boîtier (320 ; 420).

14. Terminal portable (300 ; 400), comprenant :
un premier boîtier (310 ; 410) ayant des touches d'entrée (311 ; 411) localisées sur une surface avant ;
un deuxième boîtier (320 ; 420) ayant un écran (321 ; 421) localisé sur une surface avant ;
des guides linéaires (340 ; 440) localisés séparément au niveau de chaque côté dudit deuxième boîtier (320 ; 420) ; et
des moyens (330 ; 430) pour raccorder de manière rotative ledit premier boîtier (310 ; 410) auxdits guides linéaires (340 ; 440) dudit deuxième boîtier (320 ; 420) ;
des circuits pour raccorder électriquement ledit écran (321 ; 421) aux composants électriques associés audit premier boîtier (310 ; 410), lesdits circuits étant **caractérisés en ce qu'**ils comprennent :
un contact électrique formé dans au moins une partie desdits guides (340 ; 440) et qui est en communication électrique avec ledit écran (321 ; 421) ; et
un contact électrique associé auxdits moyens (330 ; 430) pour raccorder de manière rotative qui est adapté pour coopérer avec ledit contact électrique formé dans au moins une partie desdits guides (340 ; 440).

15. Terminal portable selon la revendication 14, dans lequel lesdits guides linéaires (340 ; 440) sont structurés pour permettre un mouvement linéaire relatif entre ledit premier boîtier (310 ; 410) et ledit deuxième boîtier (320 ; 420).

16. Terminal portable selon la revendication 14, comprenant en outre :
un deuxième écran localisé sur une surface arrière dudit deuxième boîtier (320 ; 420).

17. Procédé d'assemblage d'un terminal portable, ledit procédé comprenant les étapes consistant à :
localiser (500) des touches d'entrée sur une surface avant d'un premier boîtier ;
localiser (505) un écran sur une surface avant d'un deuxième boîtier ;
former (510) un guide le long de deux côtés séparés dudit deuxième boîtier ;
positionner (515) une structure pivotante au niveau d'une extrémité dudit premier boîtier ;
raccorder (520) ledit premier boîtier audit deuxième boîtier en utilisant ladite structure pivotante ;
dans lequel ladite structure pivotante est reçue de manière coulissante dans lesdits guides (525) ;
raccorder électriquement ledit écran aux composants électriques associés audit premier boîtier ;
**caractérisé par** la formation d'au moins un contact électrique dans au moins une partie desdits guides et qui est en communication électrique avec ledit écran ; et l'association d'un contact électrique avec ladite structure pivotante qui coopère avec ledit contact électrique formé dans au moins une partie desdits guides.

18. Procédé selon la revendication 17, comprenant en outre l'étape consistant à :
localiser un deuxième écran sur une surface arrière dudit deuxième boîtier.

19. Procédé selon la revendication 17, comprenant en outre l'étape consistant à :
structurer lesdits guides pour permettre un mouvement de rotation relatif entre ledit deuxième boîtier et ladite structure pivotante.

20. Procédé selon la revendication 17, comprenant en outre l'étape consistant à :
structurer lesdits guides pour permettre un mouvement linéaire relatif entre ledit premier boîtier et ledit deuxième boîtier.

21. Procédé selon la revendication 17, dans lequel ladite structure pivotante est structurée pour être repositionnable de manière rotative par rapport audit premier boîtier.

22. Procédé selon la revendication 17, comprenant en outre l'étape consistant à :
localiser les axes sur ladite structure pivotante, dans lequel lesdits axes engagent de manière coulissante lesdits guides.
